# EUROPÄISCHE PATENTSCHRIFT

(11) **EP 0 556 718 B1**
(45) Veröffentlichungstag und Bekanntmachung des Hinweises auf die Patenterteilung: **16.10.1996**
(21) Anmeldenummer: 93102137.2
(22) Anmeldetag: 11.02.1993
(51) Int. Cl.: B60R 22/42

(54) **Sicherheitsgurt-Rückhaltesystem für Fahrzeuge**
Seat belt restraint system for vehicles
Système de retenue par ceinture de sécurité pour véhicules

(30) Priorität: 20.02.1992 DE 9202219 U
(43) Veröffentlichungstag der Anmeldung: 25.08.1993
(73) Patentinhaber: TRW Occupant Restraint Systems GmbH, D-73553 Alfdorf (DE)
(72) Erfinder: Frei, Bernhard, W-7076 Waldstetten (DE); Röhrle, Martin, W-7075 Mutlangen (DE); Hirzel, Uwe, W-7150 Backnang (DE); Hönl, Wolf-Dieter, W-7071 Böbingen (DE)
(74) Vertreter: Degwert, Hartmut, Dipl.-Phys.

(56) Entgegenhaltungen:
- WO-A-88/09274
- DE-A- 3 421 837
- GB-A- 2 157 152
- US-A- 4 319 667

## Beschreibung

Die Erfindung betrifft ein Sicherheitsgurt-Rückhaltesystem für Fahrzeuge, mit einem Gurtaufroller und einer diesem nachgeordneten Gurtband-Klemmeinrichtung mit zwei einander gegenüberliegend, beiseitig des Gurtbandes angeordneten Klemmkeilen, die sich mit vom Gurtband abgewandten Gleitflächen gegen gehäusefeste Stützflächen abstützen und fahrzeugsensitiv und/oder gurtbandsensitiv aus einer Ruhestellung gemeinsam mit ihren einander gegenüberliegenden Klemmflächen in Richtung auf eine in Gurtabzugsrichtung gelegene Klemmstellung in Anlage am Gurtband beweglich sind, wobei die Klemmflächen in der Klemmstellung einen Winkel miteinander bilden, der in Richtung des Gurtabzugs offen ist.

In einem solchen System, das beispielsweise aus der DE-A-34 21 837 bekannt ist, hat die Gurtband-Klemmeinrichtung die Aufgabe, bei einer fahrzeugsensitiv oder gurtbandsensitiv ausgelösten Sperrung des Gurtaufrollers den Filmspuleneffekt zu eliminieren oder zumindest zu verringern, der bei herkömmlichen Gurtaufrollern ursächlich für das Abziehen einiger Zentimeter Gurtbandlänge durch Straffung des Gurtbandwickels nach Blockierung der Gurtspule ist. Ferner entlastet die Gurtband-Klemmeinrichtung den Gurtaufroller, so daß dieser für geringe mechanische Belastungen dimensionierbar ist. Ein vergleichbares System ist auch aus der DE-A-33 30 938 bekannt.

Gurtband-Klemmeinrichtungen müssen über ihre in Richtung des Gurtbandverlaufs relativ geringe Längenausdehnung eine sehr große, auf das Gurtband ausgeübte Kraft aufnehmen können. Daher wird das Gurtband im Falle eines Fahrzeugaufpralls im Bereich des Angriffs der Klemmeinrichtung außerordentlich hohen Belastungen ausgesetzt. Aber auch im normalen Fahrzeugbetrieb kann das Gurtband durch die Gurtband-Klemmeinrichtung beansprucht werden. Man möchte die Ansprechschwelle der Gurtband-Klemmeinrichtung nämlich möglichst niedrig legen, damit letztere bei einem Fahrzeugaufprall möglichst frühzeitig in Funktion tritt. Bei niedriger Ansprechschwelle wird das Gurtband aber auch im normalen Fahrzeugbetrieb häufig und zumeist an derselben Stelle von der Gurtband-Klemmeinrichtung beaufschlagt und kann im Laufe der Zeit sicherheitsrelevant beschädigt werden.

Die bekannte Ausführung der Gurtband-Klemmeinrichtung mit zwei beidseitig des Gurtbandes angeordneten Klemmkeilen ist geeignet, die genannten Beanspruchungen zu verringern, da sich ihre Klemmkeile synchron miteinander bewegen, so daß keine das Gurtband beanspruchende Relativbewegung zwischen ihnen stattfindet und das Gurtband beidseitig symmetrisch belastet wird. Im praktischen Einsatz reißt das Gurtband dennoch bereits bei Beanspruchungen, die wesentlich unter der statischen Reißfestigkeit des Gurtbandes liegen.

Beim aus der DE-A-34 21 837 bekannten Sicherheitsgurt-Rückhaltesystem liegen die Gleitflächen auch in der Ruhestellung parallel zu den Stützflächen, so daß die Klemmflächen bereits in dieser Ruhestellung einen in Richtung des Gurtbandes offenen Winkel miteinander bilden.

Der Erfindung liegt die Aufgabe zugrunde, die dynamische Belastbarkeit bekannter Sicherheitsgurt-Rückhaltesysteme noch weiter zu steigern.

Diese Aufgabe wird bei einem gattungsgemäßen Sicherheitsgurt-Rückhaltesystem erfindungsgemäß dadurch gelöst, daß in der Ruhestellung die Gleitflächen durch ein Haltemittel in einer geneigten Stellung zu den Stützflächen und die Klemmflächen parallel zum Gurtband gehalten werden und daß dieses Haltemittel unter Last unwirksam wird, so daß die Gleitflächen in Flächenkontakt mit den Stützflächen gelangen und die Klemmflächen einen in Richtung des Gurtabzugs offenen Winkel von etwa einem Grad miteinander bilden.

Der erfindungsgemäßen Lösung liegt die Erkenntnis zugrunde, daß bei der bekannten Gurtband-Klemmeinrichtung die Zugbeanspruchung des Gurtbandes an den Kanten der Klemmkeile unstetig verläuft. Im praktischen Betrieb reißt das Gurtband am ehesten an den in Gurtabzugsrichtung gelegenen Kanten der Klemmkeile ab. Eine Ursache dafür ist, daß auf das Gurtband in diesem Bereich nicht nur maximale Zugkräfte, sondern zusätzlich Querkräfte wirken.

Die Klemmflächen verlaufen in Ruhestellung etwa parallel zur Richtung des Gurtbandabzugs. Beim nächsten Kontakt mit dem Gurtband verlaufen die Klemmflächen dann zunächst parallel zueinander und zum Gurtband, so daß sich die schwachen, aber relativ häufigen anfänglichen Reibbeanspruchungen des Gurtbandes beim Ansprechen der Gurtband-Klemmeinrichtung auf eine möglichst große Fläche verteilen und ein guter Mitnahmeeffekt für die Klemmkeile erzielt wird.

Bei der erfindungsgemäßen Lösung tauchen die vorzugsweise reibungsfördernd strukturierten Klemmflächen der Klemmkeile an ihrer dem Gurtaufroller zugewandten Seite stärker in das Gurtbandmaterial ein als an der anderen Seite. An letzterer, besonders stark zugbeanspruchten Seite wirken bei geeigneter Wahl des Winkels zwischen den Klemmflächen nur geringe oder sogar keine Querkräfte auf das Gurtband, so daß eine Tendenz zum Reißen aufgrund der vorgenannten Gründe entfällt. Daß die im weiteren Gurtbandverlauf zwischen den Klemmkeilen auftretenden Querkräfte zum Gurtaufroller hin stetig zunehmen, ist unschädlich, da zugleich die Zugbeanspruchung abnimmt. Durch die beidseitig symmetrische Querbelastung des Gurtbandes, die in demselben Maße zunimmt, wie die Zugbelastung geringer wird, läßt sich eine erhebliche Steigerung der dynamischen Reißfestigkeit des Gurtaufrollers erzielen.

Gemäß einer vorteilhaften Ausführungsform wird der erwähnte Winkel von einem Grad der Klemmflächen gegenüber dem Gurtband lediglich bei hohen Belastungen, wie sie bei einem Fahrzeugaufprall auftreten, eingenommen. Dafür ist es zweckmäßig, daß eine quer zur Richtung des Gurtbandabzugs verlaufende Rippe an der Gleitfläche und/oder Stützfläche angeordnet ist, die sich ab einer bestimmten Belastung plastisch verformt und/oder ab einer bestimmten Belastung abscherbar ist, so daß die Gleitflächen flächig an den Stützflächen anliegen.

Unterstützt wird das Entfernen der Rippe, damit die Gleitflächen flächig aneinander anliegen, auf konstruktiv einfache Weise dadurch, daß in der Fläche, an der die Rippe angeordnet ist, neben der Rippe eine Rille angeordnet ist, in die die Rippe unter Last ausweicht.

Günstig kann es aber auch sein, daß die Rippe nicht zerstört wird. Dafür ist eine Vertiefung in der gegenüberliegenden Stützfläche bzw. Gleitfläche derart angeordnet und ausgebildet, daß bei Annäherung an die Klemmstellung die Rippe in die Vertiefung eintaucht und die Gleitflächen flächig an den Stützflächen anliegen.

Alternativ zu einer Rippe kann aber auch in einer Mulde in der Stützfläche und/oder Gleitfläche eine Feder vorgesehen sein, die sich ab einer bestimmten Belastung elastisch verformt, so daß die Gleitflächen flächig an den Stützflächen anliegen. Der Zeitpunkt, wann sich der Winkel der Klemmflächen gegenüber dem Gurtband einstellt, kann durch die Stärke der Feder einfach eingestellt werden.

Besonders hervorzuheben ist auch eine weitere vorteilhafte Ausführungsform, bei welcher der fahrzeugsensitiv und/oder gurtbandsensitiv sperrbare Gurtaufroller und die Gurtband-Klemmeinrichtung miteinander durch Verbindungsmittel verbunden sind, die unter plastischer Verformung nachgeben und eine begrenzte Entfernung der Gurtband-Klemmeinrichtung von dem Gurtaufroller zulassen, wenn die auf das Gurtband ausgeübte Kraft einen vorbestimmten Wert übersteigt. Die Entfernung der Gurtband-Klemmeinrichtung vom Gurtaufroller bei gleichzeitiger plastischer Verformung der Verbindungsmittel wird ausgenutzt, um Belastungsspitzen im Gurtsystem abzubauen, wobei die relativ geringe Längung des Systems nicht nur unschädlich, sondern sogar erwünscht ist. Die im Zuge der plastischen Verformung der Verbindungsmittel blockierte Gurtspule nimmt Zugkräfte auf, welche die Kräfte übersteigen, für deren Aufnahme die Gurtband-Klemmeinrichtung maximal ausgelegt ist. Die Krafteinleitung in das Rückhaltesystem verteilt sich dann besonders gleichmäßig entlang des Gurtbandes. Die Gurtspule und ihre Lagerung, aber auch die Gurtband-Klemmeinrichtung können wesentlich schwächer als bei herkömmlichen Lösungen dimensioniert sein und somit von geringem Gewicht und kostengünstig herstellbar sein. Die Gurtspule und die Gurtband-Klemmeinrichtung können im Baukastensystem für verschiedene Anforderungen an das Sicherheitsgurt-Rückhaltesystem zusammengestellt sein.

Vorteilhafte Ausführungsformen bilden die Gegenstände der anderen Unteransprüche.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Fig. 1 eine teilweise geschnittene Seitenansicht einer Ausführungsform des Gurtaufrollers mit nachgeschalteter Gurtband-Klemmeinrichtung mit doppeltem Klemmkeil;
Fig. 2 eine Schnittansicht dieser Ausführungsform entlang einer Linie II-II in Fig. 1;
Fig. 3 eine schematische Schnittdarstellung der GurtbandKlemmeinrichtung mit doppeltem Klemmkeil nach Fig. 1;
Fig. 4 eine schematische Detaildarstellung im Schnitt der Gurtband-Klemmeinrichtung nach Fig. 3;
Fig. 5 und 6 eine schematische Detaildarstellung im Schnitt von weiteren Ausführungsformen einer Gurtband-Klemmeinrichtung;
Fig. 7 eine Perspektivansicht eines Gurtaufrollers und einer mit diesem über plastisch verformbare Verbindungsmittel verbundenen Gurtband-Klemmeinrichtung im Zustand vor dem Auftreten einer hohen Belastung;
Fig. 8 das in Fig. 4 gezeigte System nach dem Auftreten einer hohen Belastung;
Fig. 9 den prinzipiellen Kraftverlauf am Gurtband als Funktion der Gurtbandlängung bei einem System nach den Figuren 1 und 2 bzw. 4 und 5; und
Fig. 10 bis 14 weitere Ausführungsformen der Verbindungsmittel.

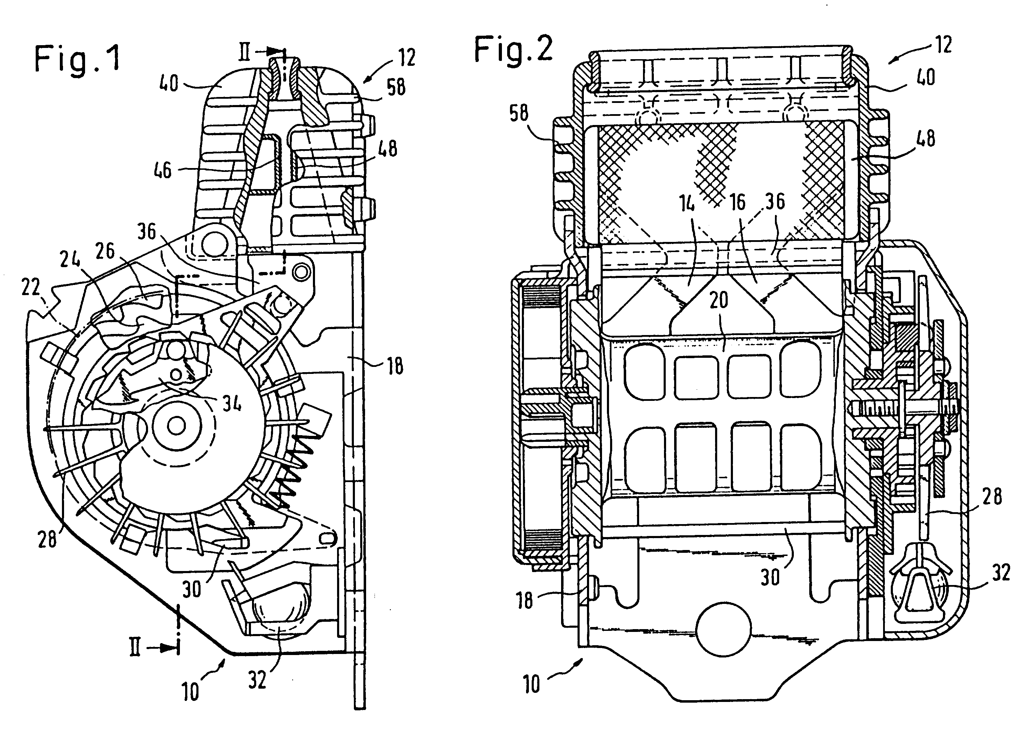

Bei der in den Figuren 1 und 2 gezeigten Ausführungsform sind ein mit 10 bezeichneter, allgemein bekannter Gurtaufroller und eine allgemein mit 12 bezeichnete Gurtband-Klemmeinrichtung über Stege 14 und 16 miteinander verbunden.

Der Gurtaufroller 10 enthält ein U-förmiges Gehäuse 18, in dessen Seitenschenkel eine Gurtspule 20 radial nachgiebig gelagert ist. Auf die Gurtspule 20 ist ein Gurtband 22 teilweise aufgewickelt, das (nicht eingezeichnet) mittig durch die Gurtband-Klemmeinrichtung 14 hindurch verläuft. An die Gurtspule 20 sind seitliche Sperrzahnräder 24 angeformt, die bei Auslenkung der Gurtspule 20 mit Sperrverzahnungen 26 zusammenwirken, die in öffnungen der Seitenschenkel des Gehäuses 18 angebracht sind. An einem der Sperrzahnräder 24 ist ferner eine sternförmig verzahnte Steuerscheibe 28 drehbar gelagert. Diese Steuerscheibe 28 steuert in bekannter Weise eine Sperrklinke 30 teilweise in Eingriff mit den Sperrzahnrädern 24, wenn ein fahrzeugsensitiver Kugelsensor 32 auf eine Fahrzeugverzögerung oder ein nicht detailliert eingezeichneter Trägheitssensor 34 auf einen Gurtbandabzug anspricht. Bei weiterem Gurtbandabzug greifen die Sperrzahnräder 24 in die Sperrverzahnungen 26, so daß die Gurtspule 20 gegenüber einer Drehung in Gurtabzugsrichtung blockiert ist. Die Steuerscheibe 28 lenkt zugleich mit der Ansteuerung der Sperrklinke 30 einen am Gehäuse 18 gelagerten Umlenkhebel 36 in Richtung auf die Gurtband-Klemmeinrichtung 12 aus.

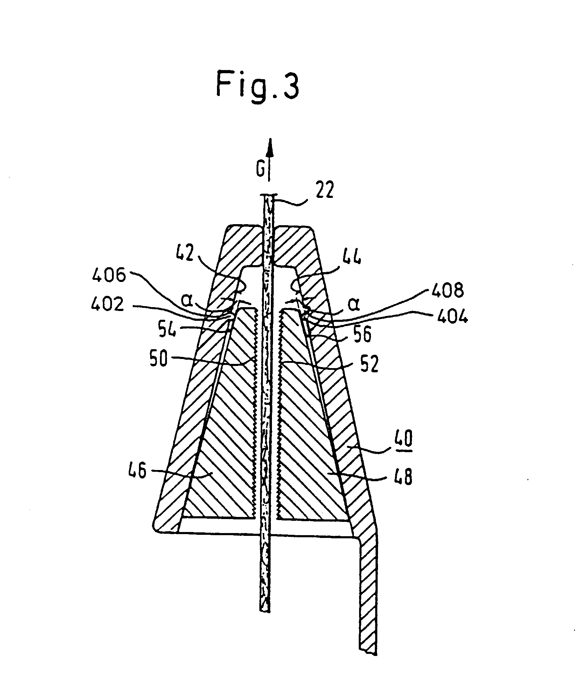

Der Aufbau der Gurtband-Klemmeinrichtung 12 wird aus Fig. 3 am deutlichsten. Ein Klemmgehäuse 40 umgibt das Gurtband 22 und ist auf seiner Innenseite mit zwei bezüglich der Gurtbandebene spiegelsymmetrischen und in Gurtabzugsrichtung G winklig zusammenlaufenden Stützflächen 42 und 44 versehen. Zwischen jeder Stützfläche 42 bzw. 44 und dem Gurtband 22 ist ein Klemmkeil 46 bzw. 48 angeordnet. Die beiden Klemmkeile 46 und 48 sind spiegelsymmetrisch bezüglich der Gurtbandebene ausgebildet. Im Ruhezustand des Rückhaltesystems sorgen nicht eingezeichnete Federn dafür, daß sich die Klemmkeile 46, 48 im Abstand zum Gurtband 22 befinden, wobei dem Gurtband 22 zugewandte Klemmflächen 50, 52 der Klemmkeile 46, 48 parallel zueinander und zur Richtung G des Gurtbandabzugs verlaufen. Die Klemmflächen 50, 52 sind reibungsfördernd strukturiert, und zwar vorzugsweise mit Zähnen besetzt, deren Zahnteilung der Struktur und dem Dehnungsverhalten des Gurtbandes 22 angepaßt ist, um einen zuverlässigen, gleichzeitig aber materialschonenden Eingriff in das Gurtband 22 zu gewährleisten. Die dem Gurtband 22 abgewandten Rückseiten der Klemmkeile 46 und 48 sind Gleitflächen 54 bzw. 56, die jeweils an einer der Stützflächen 42, 44 des Klemmgehäuses 40 entlanggleiten, wenn die Klemmkeile durch den Umlenkhebel 36 in Gurtabzugsrichtung G bewegt werden. Dabei tauchen die Zähne der Klemmflächen 50, 52 in das Gurtbandmaterial ein. Die Winkel, die die Stützflächen 42, 44 und die Gleitflächen 54, 56 mit der Gurtabzugsrichtung G einschließen, sind so gewählt, daß jeder folgende Gurtbandabzug zum selbsttätigen Verkeilen der Klemmkeile 46, 48 führt, so daß das Gurtband 22 gegenüber der Gurtband-Klemmeinrichtung 12 festliegt. Für ein leichtgängiges Einrücken der Klemmkeile 46, 48 können die Stützflächen 42, 44 bzw. die Gleitflächen 54, 56 mit einer Gleitbeschichtung versehen sein.

Für eine stetige Übertragung der auf das Gurtband 22 wirkenden Zugkräfte auf die Gurtband-Klemmeinrichtung 12 ist der Winkel, den die beiden Gleitflächen 54, 56 miteinander einschließen, wenn ihre Klemmflächen parallel zur Gurtbandfläche sind, etwas kleiner als der Winkel, den die Stützflächen 42, 44 miteinander einschließen. Im Ausführungsbeispiel beträgt der Winkel zwischen den Gleitfächen 54 und 56 etwa 27 Grad, während der Winkel zwischen den Stützflächen 42 und 44 etwa 26 Grad beträgt, wenn die Klemmflächen 50, 52 im Ruhezustand parallel zum Gurtband 22 verlaufen. Zwischen je einer Gleitfläche 42 bzw. 44 und der dazugehörigen Stützfläche 54 bzw. 56 besteht also ein Differenzwinkel α von etwa einem halben Grad. Bei Aktivierung der Gurtband-Klemmeinrichtung 12 graben sich die dem Gurtaufroller 10 benachbarten Teile der Klemmflächen 50, 52 also stärker in das Gurtbandmaterial ein als ihre in Gurtabzugsrichtung gelegenen Teile. Der Druck und damit die Kraftübertragung zwischen dem Gurtband 22 und der Gurtband-Klemmeinrichtung 12 nehmen also in Gurtabzugsrichtung G stetig ab. Idealerweise wird der Differenzwinkel α in Abstimmung auf die Dicke und die Dehnung des Gurtbandmaterials und auf die Abmessungen der Gurtband-Klemmeinrichtung 12 so gewählt, daß am in Gurtabzugsrichtung G gelegenen Ende der Klemmflächen 50, 52 kein oder nur ein relativ geringer Kraftübertrag zwischen dem Gurtband 22 und der GurtbandKlemmeinrichtung 12 stattfindet. Damit treten in diesem Bereich praktisch keine Querbeanspruchungen des Gurtbandes 22 auf, die wegen der ab dieser Stelle höchsten Zugbelastung des Gurtbands bei herkömmlichen Gurtband-Klemmeinrichtungen eine Neigung des Gurtbandes fördern, gerade an dieser Stelle zu reißen.

Wegen der symmetrischen Ausbildung der Klemmkeile 46, 48 findet bei Belastung der Gurtband-Klemmeinrichtung 12 keine Relativbewegung in Richtung des Gurtbandverlaufs zwischen ihnen statt, was sich ebenfalls günstig auf die Belastbarkeit des Gurtbandes 22 auswirkt. Damit auch im normalen Betrieb, wenn die Klemmkeile 46, 48 mehr oder weniger häufig eingesteuert werden und dabei am Gurtband 22 angreifen, kein die Betriebssicherheit beeinträchtigender Verschleiß stattfindet, werden die Klemmkeile 46, 48 vorzugsweise gemeinsam eingesteuert. Da die Klemmflächen 50, 52 bis zum Kontakt mit dem Gurtband 22 parallel zu diesem verlaufen, erfolgt eine sanfte Mitnahme der Klemmkeile 46, 48 durch das Gurtband 22 in dessen Abzugsrichtung G, sobald ein weiterer Gurtbandabzug stattfindet. Zur Einsteuerung der Klemmkeile 46, 48 kann der Umlenkhebel 36 entsprechend ausgebildet sein, oder die Klemmkeile 46, 48 sind in einer in der Zeichnung nicht sichtbaren Weise formschlüssig miteinander verbunden, etwa durch seitlich des Gurtbandes übergreifende Führungen, so daß sie sich stets gemeinsam in Gurtabzugsrichtung G bewegen.

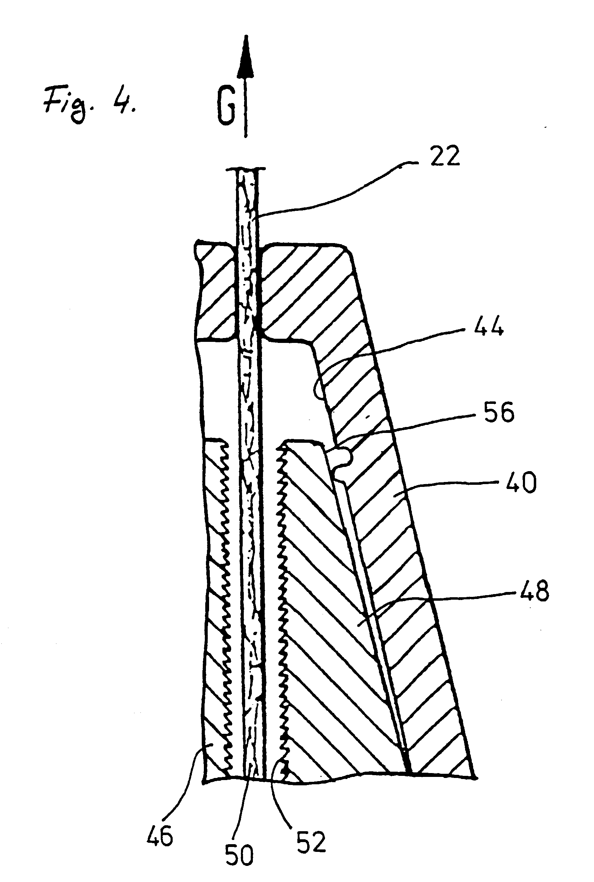

Um zu gewährleisten, daß die Klemmflächen 50, 52 in der Ruhestellung parallel zum Gurtband 22 gehalten werden und insbesondere bei hohen Belastungen, wie einem Fahrzeugaufprall, die Gleitflächen 54 und 56 flächig an den Stützflächen 42 und 44 anliegen, ist in der Stützfläche 42 und 44 jeweils eine Rippe 402 und 404 sowie eine Rille 406 und 408 vorgesehen. Deutlich ist diese Ausbildung der Fig. 4 zu entnehmen, wo der Übersichtlichkeit halber lediglich eine Hälfte des Klemmgehäuses 40 dargestellt ist.

Bei geringen Belastungen wird die Gleitfläche 56 auf der Rippe 404 geführt und somit die Klemmflächen 50 und 52 parallel zum Gurtband 22 gehalten. Die Klemmfläche 52 greift mit Betätigen der Klemmeinrichtung 12 mit ihrer ganzen Fläche an das Gurtband 22 an, so daß dieses gleichmäßig durch die gesamte Klemmfläche 52 belastet wird. Entsprechendes gilt auch für den Klemmkeil 46 und die Rippe 402.

Beispielsweise bei einem Fahrzeugaufprall, bei dem hohe Belastungen auftreten, wird der Klemmkeil 48 zunächst in Richtung G des Gurtabzugs an das Gurtband 22 herangeführt, so daß die Klemmfläche 52 an dem Gurtband 22 anliegt. Mit zunehmender Belastung drückt der Klemmkeil 48 die Rippe 404 unter plastischer Verformung in die benachbarte Rille 408. Die Gleitfläche 56 liegt dann flächig an der Stützfläche 44 an und es ergibt sich ein in Richtung G des Gurtbandabzugs offener spitzer Winkel zwischen der Klemmfläche 52 und dem Gurtband 22. Ein entsprechend synchrones Verfahren bei einer hohen Belastung ergibt sich auch in bezug auf den Klemmkeil 46, der die Rippe 402 unter plastischer Verformung in die Rille 406 drückt.

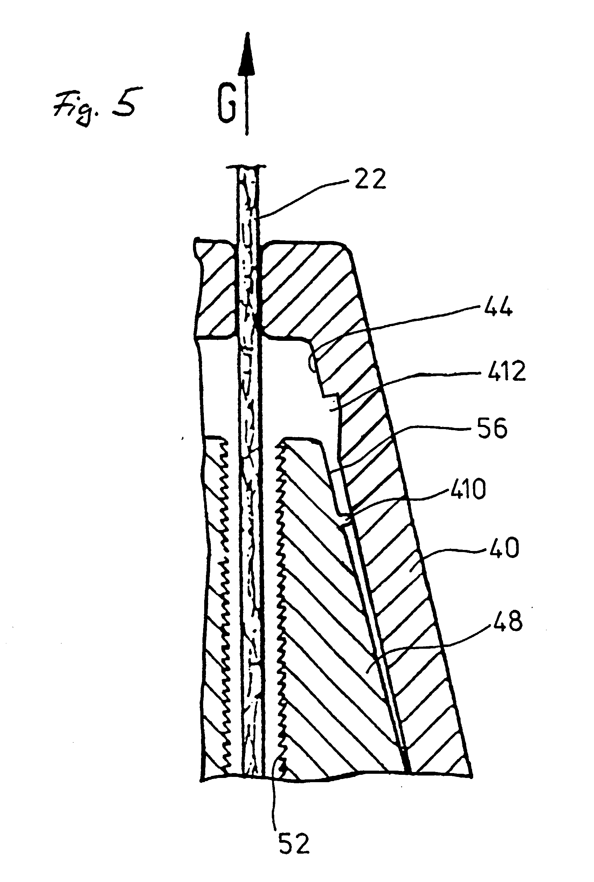

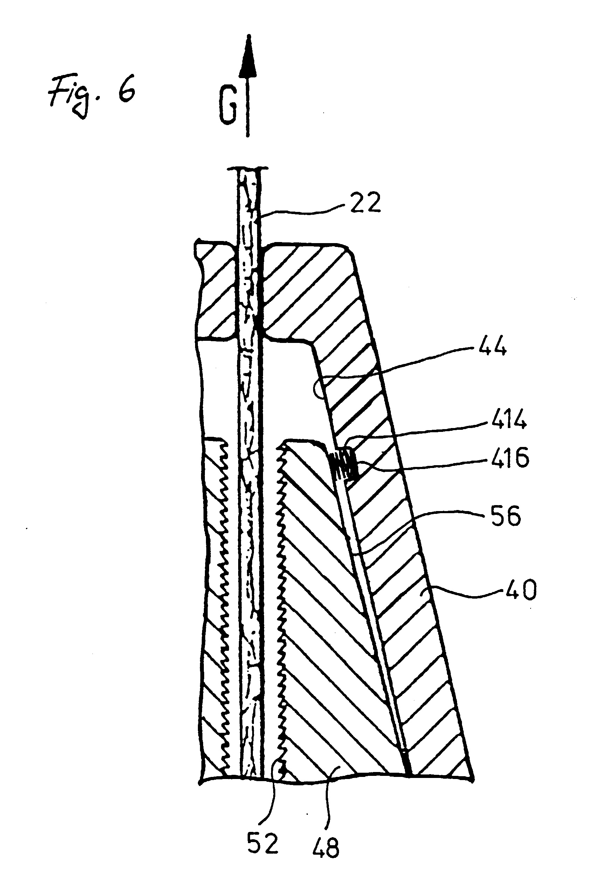

Alternativ zu der in Fig. 3 und 4 dargestellten Ausführungsform können die Ausführungsformen, die in Fig. 5 und 6 dargestellt sind, verwendet werden.

Gemäß Fig. 5 ist eine Rippe 410 in dem Klemmkeil 48 auf der Gleitfläche 56 angebracht, so daß der Klemmkeil 48 über die Rippe 410 an dem Klemmgehäuse 40 abgestützt wird. In dem Klemmgehäuse 40 ist eine Vertiefung 412 in der Stützfläche 44. Die Vertiefung 412 ist rampenförmig ausgebildet und mit Abstand zur Rippe 410 angeordnet. Der Abstand und die Rampenform sind dabei so gewählt, daß, wenn die Klemmfläche 52 an dem Gurtband 22 anliegt, die Rippe 410 mit dem Zusammendrükken des Gurtbands 22 in die Vertiefung 412 eintaucht. Eine entsprechende Ausbildung weisen auch der Klemmkeil 46 und die Stützfläche 42 auf, die der Einfachheit halber hier nicht dargestellt sind. Durch diese Ausführungsform wird die Rippe 410 bei hohen Belastungen nicht zerstört.

Eine andere, in Fig. 6 dargestellte Ausführungsform weist für die Winkeländerung der Klemmkeile 46 und 48 gegenüber dem Gurtband 22 eine Feder 414 in einer Mulde 416 auf. Die Mulde 416 ist in der Stützfläche 44 des Klemmgehäuses 40 angeordnet und die Feder 414 liegt an der Gleitfläche 56 des Klemmkeils 48 an. Die Feder 414 ist so dimensioniert, daß sie mit Überschreiten einer vorbestimmten Belastung durch den Klemmkeil 48 in die Mulde 416 gedrückt wird. Die Gleitfläche 56 liegt dann flächig an der Stützfläche 44 an, wenn die Feder 414 vollständig durch den Klemmkeil 48 in die Mulde 416 gedrückt ist. Eine entsprechende Anordnung und Ausbildung der Feder 414 und der Mulde 416 ist auch an dem anderen Klemmkeil 46 vorgesehen, so daß eine synchrone Bewegung der beiden Klemmkeile 46 und 48 ermöglicht wird.

Mit den beschriebenen Gurtband-Klemmeinrichtungen wurden im Versuch je nach Gurtbandmaterial bei einer statischen Reißfestigkeit von etwa 24 kN dynamische Reißfestigkeiten bis zu 20 kN erzielt. Es zeigte sich, daß die dynamischen Reißfestigkeiten deutlich näher an den theoretisch maximal zu erwartenden statischen Reißfestigkeiten liegen als bei bisher bekannten Klemmeinrichtungen. Zudem erwies sich die Gurtband-Klemmeinrichtung als unempfindlich gegenüber Verschmutzungen des Gurtes mit Öl, Fett, Hohlraumkonservierungs- und anderen Stoffen, da deren Anwesenheit weder die Reißfestigkeit verminderte noch einen vergrößerten Gurtbandauszug unter Last zur Folge hatte.

Die beschriebenen Gurtband-Klemmeinrichtungen halten jeweils das Gurtband also zuverlässig fest und schonen es zugleich. Von den zahlreichen Möglichkeiten, diese Gurtband-Klemmeinrichtung zudem mit geringem Gewicht und kostengünstig herzustellen, seien nur einige genannt: Die Klemmkeile 46, 48 können aus Kunststoff, durch Leichtmetall-Druckguß oder aus Metall-Hohlprofilen hergestellt sein. Das vorzugsweise aus Stahl oder Sintermaterial bestehende Klemmgehäuse 40 kann auch durch Al- oder Zn-Druckguß hergestellt sein. Rippen 58, die in Fig. 1 sichtbar sind, dienen zur Versteifung des Klemmgehäuses 40.

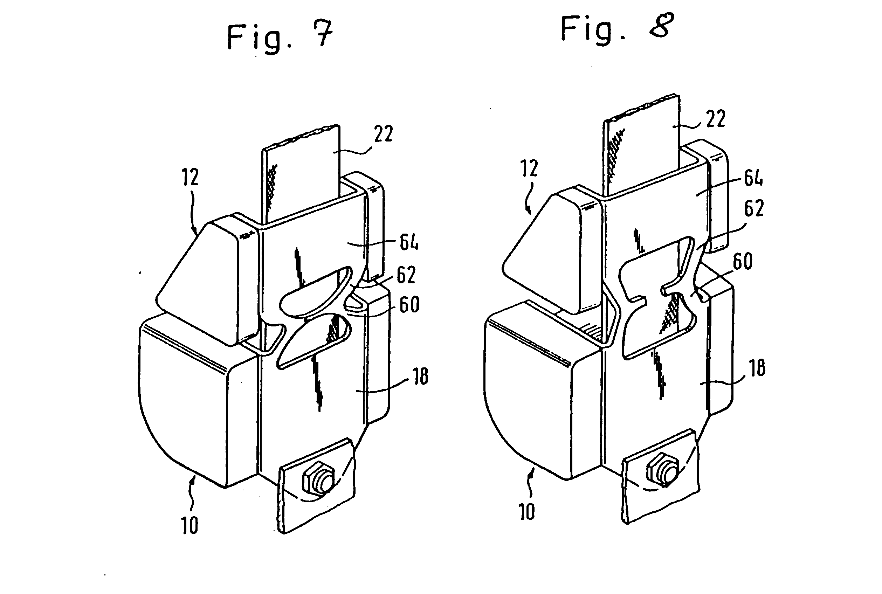

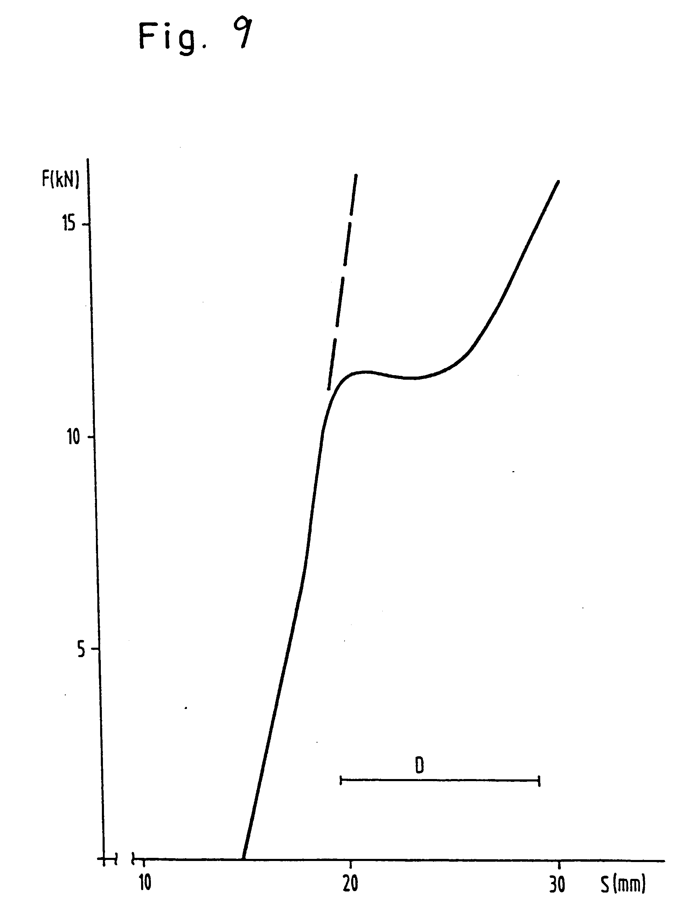

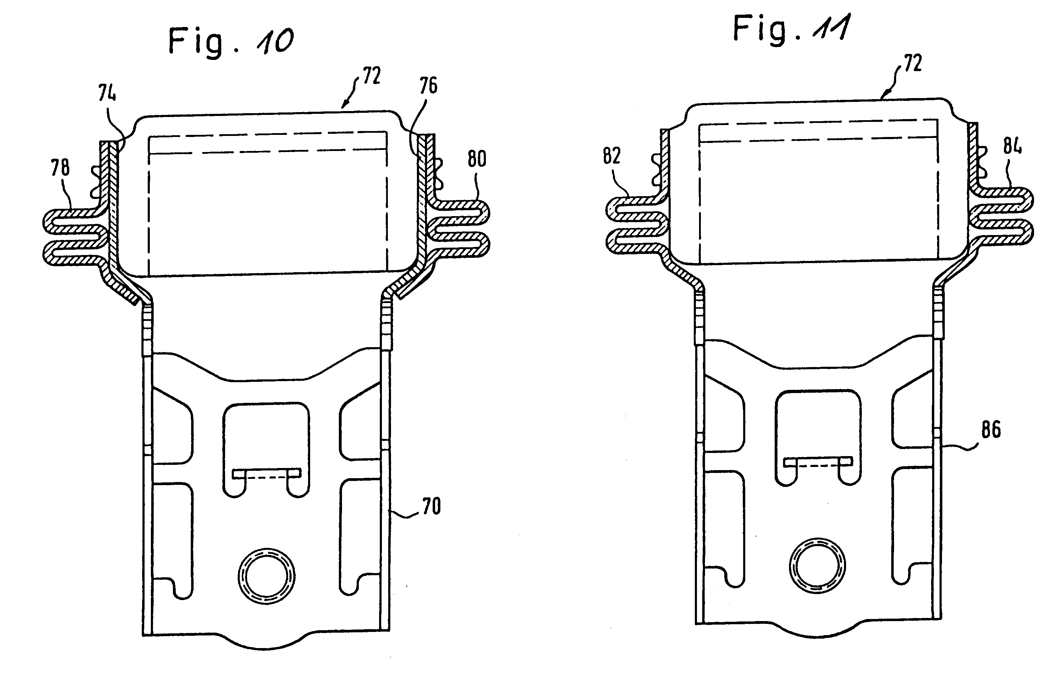

Die Ausbildung und Funktion der in Fig. 2 nur teilweise sichtbaren Stege 14 und 16, die den Gurtaufroller 10 und die Gurtband-Klemmeinrichtung 12 miteinander verbinden, wird zunächst anhand der Figuren 7 und 8 erläutert. Bei der dort dargestellten Ausführungsform des Sicherheitsgurt-Rückhaltesystems ist das Gehäuse 18 des Gurtaufrollers 10 über einen bogenförmigen Steg 60 mit einem entgegengesetzt gebogenen Steg 62 des Gehäuses 64 der Gurtband-Klemmeinrichtung 12 verbunden. Die Stege 60, 62 sind an ihren Scheiteln miteinander verschmolzen und an ihren freien Enden jeweils an das zugehörige Gehäuse angeschlossen. Die Breite der bogenförmigen Schenkel 60, 62 ist im Bereich ihrer Scheitel am geringsten, so daß dort eine Sollbruchstelle entsteht. Wenn der vorbestimmte Wert erreicht ist, bis zu dem die Gurtbandblockierung allein durch die Gurtband-Klemmeinrichtung erfolgen soll, beginnen die Stege 60, 62 sich plastisch zu verformen. Dabei entfernen sich die Gehäuse 18, 64 voneinander. Ab einem bestimmten Belastungswert reißen die Stege 60, 62 an ihrer Vereinigungsstelle im Bereich ihrer Scheitel ab. Die verbleibenden Stegabschnitte werden weiter gedehnt, bis etwa der in Fig. 8 gezeigte Zustand erreicht ist. Die Strecke D, um die sich die beiden Gehäuse 18, 64 voneinander entfernt haben, reicht aus, um die Sperrzahnräder 24 der Gurtspule 20 in Eingriff mit den gehäusefesten Sperrverzahnungen 26 zu verlagern.

Die Stege 14 und 16 der Figuren 1 und 2 verformen sich bei erhöhter Belastung prinzipiell ebenso wie im Zusammenhang mit den Fig. 7 und 8 erläutert. Unterschiedlich ist, daß die Stege 14 und 16 winklige Fortsätze des Gehäuses 18 des Gurtaufrollers 10 sind, die mit der Gurtband-Klemmeinrichtung 12 beispielsweise über Nieten 66 verbunden sind. Die beiden Stege 14 und 16 sind hier nicht über eine Sollbruchstelle miteinander verbunden, da sie relativ breit und von vornherein steifer sind.

Bei der plastischen Verformung der Stege 14, 16 bzw. 60, 62 wird Arbeit verrichtet, also Energie absorbiert, wodurch in erwünschter Weise Belastungsspitzen im Gurtsystem abgebaut werden. Die Energieabsorption erfolgt etwa im Verlauf der in Fig. 9 eingezeichneten Strecke D, wobei S die gesamte Gurtbandlängung einschließlich der Gehäuseverformung des Systems ist. Der in Fig. 9 eingezeichnete Graph veranschaulicht die auf das Gurtband wirkende Kraft F als Funktion der Gurtbandlängung s bei einem System nach den Fig. 1 und 2 oder 7 und 8. Gestrichelt dargestellt ist der weitaus steilere Kraftverlauf bei einer feststehenden Gurtband-Klemmeinrichtung.

Die für die Energieabsorption genutzte Strecke D kann bis zu etwa 50 mm betragen und wird vorzugsweise so gewählt, daß die Gurtband-Klemmeinrichtung 12 nicht über einen ihr immanenten kritischen Wert hinaus belastet wird und darüber hinaus gehende Kräfte vom Gurtaufroller 10 aufgenommen werden, wobei der diesen Kräften entsprechende Filmspuleneffekt zu berücksichtigen ist. Der aufgrund des Filmspuleneffekts noch erfolgende Gurtbandabzug ist aber deutlich geringer als bei einem System ohne Gurtband-Klemmeinrichtung und für die gemäß Fig. 9 abgeflachte Krafteinleitung in das System sogar erwünscht, da eine weitere Energieabsorption stattfindet. Wegen des Nichtauftretens von Kraftspitzen ist es auch möglich, kostengünstige und leichte Systemelemente zu verwenden. So können z.B. die Gurtspule und /oder ihre tragende Welle bzw. die Klemmkeile aus Kunststoff sein.

Die plastisch verformbaren Verbindungsmittel können in ganz unterschiedlicher Weise ausgeführt sein. Einige vorteilhafte Ausführungen werden im folgenden beschrieben.

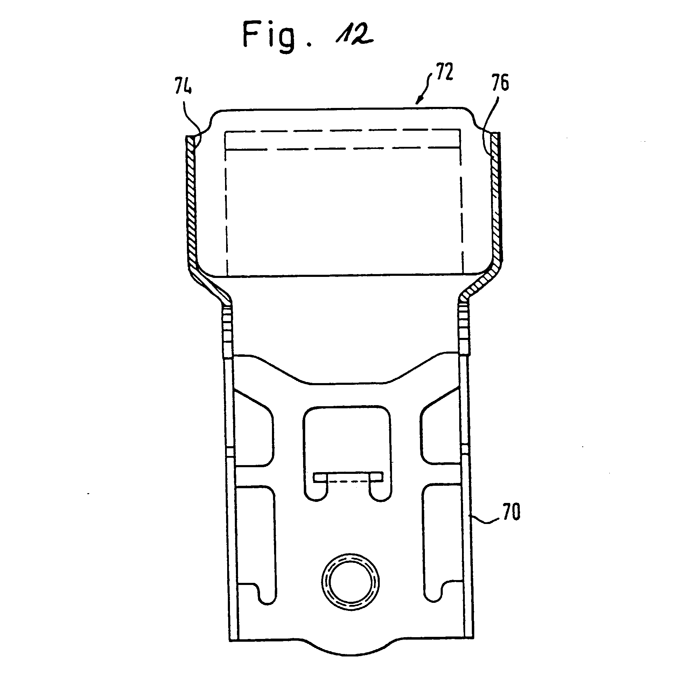

In Fig. 10 sind in Draufsicht ein Gurtspulengehäuse 70, ein Teil einer Gurtband-Klemmeinrichtung 72 und diese verbindende, seitlich angebrachte Stege 74, 76 gezeigt. Die Stege 74, 76 sind so ausgelegt, daß sie bei einer eine Schwelle von beispielsweise 10-12 kN übersteigenden Kraft zwischen der Gurtband-Klemmeinrichtung 72 und dem Gurtspulengehäuse 70 abreißen. Danach längen sich seitlich übergreifende, in einem Teilbereich zusammengefaltete Dehnungselemente 78, 80 plastisch, lassen aber eine Auseinanderbewegung des Gurtspulengehäuses 70 und der Gurtband-Klemmeinrichtung 72 nur bis zu ihrer Streckung zu.

Die Ausführungsform nach Fig. 11 unterscheidet sich von derjenigen nach Fig. 10 nur dadurch, daß einen Schwellwert bestimmende Stege fehlen und Dehnungselemente 82, 84 direkt am Gurtspulengehäuse 86 angebracht sind. Die Dehnungselemente 82, 84 können auch einstückige Fortsätze des Gurtspulengehäuses 86 sein.

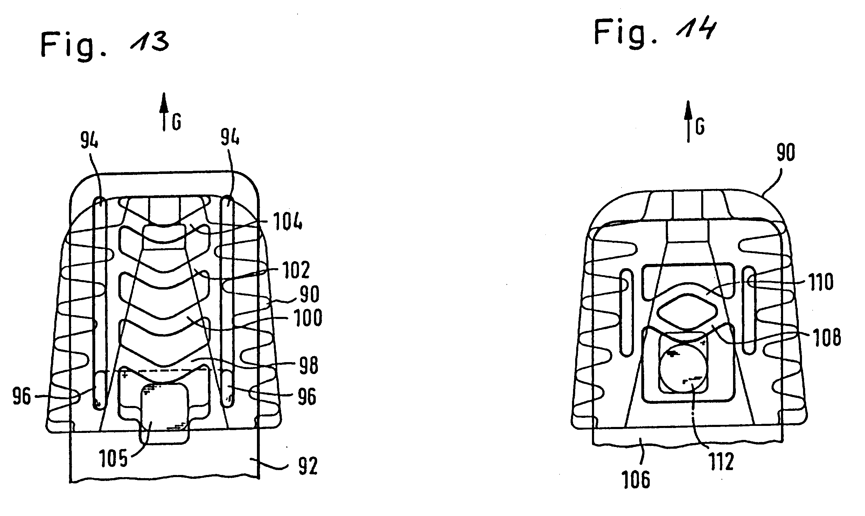

Die Ausführungsform nach Fig. 12 unterscheidet sich von derjenigen nach Fig. 10 nur dadurch, daß die zusammengefalteten Dehnungselemente 78 und 80 fehlen und die Stege 74 und 76 durch plastische Verformung nachgeben. Die Stege 74 und 76 lassen eine begrenzte Entfernung der Gurtbandklemmeinrichtung 12 von dem Gurtaufroller 10 zu, wenn die auf das Gurtband 22 ausgeübte Kraft einen vorbestimmten Wert übersteigt.

Weitere Ausführungsformen für plastisch verformbare Verbindungsmittel ergeben sich aus den Figuren 13 und 14, in denen zur Orientierung und schematisch jeweils eine der Gurtband-Klemmeinrichtung 12 aus Fig. 1 entsprechende Gurtband-Klemmeinrichtung 90 eingezeichnet ist. Das lasttragende Gehäuse des Gurtaufrollers ist nur teilweise gezeigt, und zwar in Fig. 13 in Form eines laschenförmigen Fortsatzes 92 dieses Gehäuses. Ein oder mehrere solcher Fortsätze 92 verlaufen entlang je einer Seite der Gurtband-Klemmeinrichtung 90. Jeder Fortsatz 90 weist Langlöcher 94 auf, in denen die Gurtband-Klemmeinrichtung 90 mittels vorspringender Zapfen 96 in Gurtabzugsrichtung G beweglich gelagert ist. Der Fortsatz 92 in Fig. 13 weist vier freistehende, quer zur Gurtabzugsrichtung G verlaufende Stege 98, 100, 102 und 104 auf, die durch Materialaussparungen im Fortsatz 92 gebildet sind. Das lasttragende Gehäuse der Gurtband-Klemmeinrichtung 90 weist einen Ansatz 105 auf, der in eine der Aussparungen im Fortsatz 92 ragt und in Gurtabzugsrichtung G von dem Steg 98 abgestützt ist. Bei einer Belastung des Sicherheitsgurt-Rückhaltesystems oberhalb eines durch die Steifigkeit der in Richtung des Ansatzes 105 abgewinkelten Stege 98, 100, 102 und 104 gegebenen Schwellwertes verformen sich die Stege 98, 100, 102 und 104 nacheinander plastisch, wobei sie der Gurtband-Klemmeinrichtung 90 eine Bewegung unter Energieabgabe in Gurtabzugsrichtung G ermöglichen.

Die Ausführungsform nach Fig. 13 ist für eine Bewegung der Gurtband-Klemmeinrichtung 90 um etwa 30 mm ausgelegt, während die Ausführungsform nach Fig. 14 für eine Bewegung der Gurtband-Klemmeinrichtung 90 um etwa 10 mm ausgelegt ist. Die Ausführungsform nach Fig. 14 unterscheidet sich von der zuvor beschriebenen im wesentlichen dadurch, daß ein laschenförmiger Fortsatz 106 des Gurtaufrollergehäuses lediglich zwei Stege 108 und 110 aufweist, die in einander entgegengesetzten Richtungen abgewinkelt sind. An dem Steg 108 stützt sich wie zuvor beschrieben ein Ansatz 112 der Gurtband-Klemmeinrichtung 90 ab.

Die genannten Vorzüge der Komponenten des SicherheitsgurtRückhaltesystems, insbesondere die wirksam gesteigerte Bruchlastfestigkeit, die Leichtbaufähigkeit und die Eignung als Baukastensystem, gelten in besonderem Maße für das Gesamtsystem, wenn der Gurtaufroller mit nachgiebig gelagerter Gurtspule, die Gurtband-Klemmeinrichtung mit Doppelkeil und die elastisch verformbaren Verbindungsmittel wie beschrieben miteinander zusammenwirken.

## Patentansprüche

1. Sicherheitsgurt-Rückhaltesystem für Fahrzeuge, mit einem Gurtaufroller (10) und einer diesem nachgeordneten Gurtband-Klemmeinrichtung (12) mit zwei einander gegenüberliegend beidseitig des Gurtbandes (22) angeordneten Klemmkeilen (46, 48), die sich mit vom Gurtband (22) abgewandten Gleitflächen (54, 56) gegen gehäusefeste Stützflächen (42, 44) abstützen und fahrzeugsensitiv und/oder gurtbandsensitiv aus einer Ru hestellung gemeinsam mit ihren einander gegenüberliegenden Klemmflächen (50, 52) in Richtung auf eine in Gurtabzugsrich tung gelegene Klemmstellung in Anlage am Gurtband (22) beweglich sind, wobei die Klemmflächen in der Klemmstellung einen Winkel miteinander bilden, der in Richtung des Gurtabzugs offen ist, **dadurch gekennzeichnet**, daß in der Ruhestellung die Gleitflächen (54, 56) durch ein Haltemittel (402, 404; 410; 414) in einer geneigten Stellung zu den Stützflächen (42, 44) und die Klemmflächen (50, 52) parallel zum Gurtband gehalten werden und daß dieses Haltemittel (402, 404; 410; 414) unter Last unwirksam wird, so daß die Gleitflächen (54, 56) in Flächenkontakt mit den Stützflächen (42, 44) gelangen und die Klemmflächen (50, 52) einen in Richtung (G) des Gurtabzugs offenen Winkel von etwa einem Grad miteinander bilden.

2. Sicherheitsgurt-Rückhaltesystem nach Anspruch 1, dadurch gekennzeichnet, daß eine quer zur Richtung (G) des Gurtbandabzugs verlaufende Rippe (402, 404) an der Gleitfläche (54, 56) und/oder Stützfläche (42, 44) angeordnet ist, die sich ab einer vorbestimmten Belastung plastisch verformt und/oder ab einer vorbestimmten Belastung abscherbar ist, so daß die Gleitflächen (54, 56) flächig an den Stützflächen (42, 44) anliegen.

3. Sicherheitsgurt-Rückhaltesystem nach Anspruch 2, dadurch gekennzeichnet, daß in der Fläche (54, 56) bzw. (42, 44), an der die Rippe (402, 404) angeordnet ist, neben der Rippe (402, 404) eine Rille (406, 408) angeordnet ist, in die die Rippe (402, 404) unter Last ausweicht.

4. Sicherheitsgurt-Rückhaltesystem nach Anspruch 1, dadurch gekennzeichnet, daß eine quer zur Richtung (G) des Gurtbandabzugs verlaufende Rippe (410) an der Gleitfläche (54, 56) und/oder Stützfläche (42, 44) angeordnet ist und eine Vertiefung (412) in der gegenüberliegenden Stützfläche (42, 44) bzw. Gleitfläche (54, 56) derart angeordnet und ausgebildet ist, daß bei Annäherung an die Klemmstellung die Rippe (410) in die Vertiefung (412) eintaucht und die Gleitflächen (54, 56) flächig an den Stützflächen (42, 44) anliegen.

5. Sicherheitsgurt-Rückhaltesystem nach Anspruch 1, dadurch gekennzeichnet, daß in einer Mulde (416) in der Stützfläche (42, 44) und/oder Gleitfläche (54, 56) eine Feder (414) vorgesehen ist, die sich ab einer bestimmten Belastung elastisch verformt, so daß die Gleitflächen (54, 56) flächig an den Stützflächen (42, 44) anliegen.

6. Sicherheitsgurt-Rückhaltesystem nach einem der vorangehenden Ansprüche, dadurch gekennzeichnet, daß die Gleitflächen (54, 56) unter einem Winkel von etwa 27 Grad zueinander geneigt sind.

7. Sicherheitsgurt-Rückhaltesystem nach einem der vorstehenden Ansprüche, dadurch gekennzeichnet, daß die Stützflächen (42, 44) und/oder die Gleitflächen (54, 56) mit einer Gleitbeschichtung versehen sind.

8. Sicherheitsgurt-Rückhaltesystem nach einem der vorstehenden Ansprüche, dadurch gekennzeichnet, daß die Klemmflächen (50, 52) der Klemmkeile (46, 48), reibungsfördernd strukturiert sind und daß die reibungsfördernde Struktur in einer das Gurtband (22) schonenden Weise an das Gurtbandmaterial angepaßt ist.

9. Sicherheitsgurt-Rückhaltesystem nach einem der vorstehenden Ansprüche, dadurch gekennzeichnet, daß der fahrzeugsensitiv und/oder gurtbandsensitiv sperrbare Gurtaufroller (10) und die Gurtband-Klemmeinrichtung (12) miteinander durch Verbindungsmittel (14, 16; 60, 62; 74, 76, 78, 80; 82, 84; 92, 104; 106, 112) verbunden sind, die unter plastischer Verformung nachgeben und eine begrenzte Entfernung der Gurtband-Klemmeinrichtung (12) von dem Gurtaufroller (10) zulassen, wenn die auf das Gurtband (22) ausgeübte Kraft einen vorbestimmten Wert übersteigt.

10. Sicherheitsgurt-Rückhaltesystem nach Anspruch 9, dadurch gekennzeichnet, daß die lasttragenden Gehäuse (18, 64) des Gurtaufrollers (10) und der Gurtband-Klemmeinrichtung (12) durch verformbare Stege (14, 16; 60, 62; 74, 76) miteinander verbunden sind.

11. Sicherheits-Rückhaltesystem nach Anspruch 10, dadurch gekennzeichnet, daß die verformbaren Stege (14, 16; 60, 62) bogenförmig und an die einander benachbarten Gehäuseenden angeschlossen sind.

12. Sicherheitsgurt-Rückhaltesystem nach Anspruch 11, dadurch gekennzeichnet, daß die verformbaren Stege (60, 62) an ihren Scheiteln miteinander vereinigt sind und im Bereich ihrer Vereinigung eine Sollbruchstelle bilden.

13. Sicherheitsgurt-Rückhaltesystem nach Anspruch 9, dadurch gekennzeichnet, daß das lasttragende Gehäuse des Gurtaufrollers wenigstens einen laschenförmigen Fortsatz (92, 106) aufweist, an dem das lasttragende Gehäuse der Gurtband-Klemmeinrichtung (90) in Gurtbandabzugsrichtung (G) verschiebbar gelagert ist und der wengistens einen quer zur Gurtabzugsrichtung verlaufenden, verformbaren Steg (98, 100, 102, 104; 108, 110) aufweist, und daß das lasttragende Gehäuse der GurtbandKlemmeinrichtung (90) wenigstens einen Ansatz (105, 112) aufweist, mit dem es sich gegen den Steg (98, 108) entgegen der Gurtabzugsrichtung (G) abstützt.

14. Sicherheitsgurt-Rückhaltesystem nach Anspruch 13, dadurch gekennzeichnet, daß mehrere bogenförmige Stege (98, 100, 102, 104; 108), deren Scheitel dem Ansatz (105, 112) zugewandt sind, parallel zu- und im Abstand voneinander angeordnet sind.

## Claims

1. Safety belt restraining system for vehicles comprising a belt retractor (10) and a webbing clamping means (12) arranged downstream of the latter and having two clamping wedges (46, 48) which are arranged opposite each other on either side of the webbing (22), bear with slide faces (54, 56) remote from the webbing (22) against housing-fixed support surfaces (42, 44) and are movable jointly in vehicle-sensitive and/or webbing-sensitive manner out of a rest position and with their mutually opposite clamping faces (50, 52) in the direction towards a clamping position located in the belt withdrawal direction into engagement with the webbing (22), said clamping faces in the clamping position forming an angle which is open in the direction of belt withdrawal, characterized in that in the rest position, the slide faces (54, 56) are retained by holding means (402, 404; 410; 414) in an inclined position with respect to the support surfaces (42, 44), and with their clamping faces (50, 52) parallel to the webbing, and that said holding means (402, 404; 410; 414) are disabled under load so that the slide faces (54, 56) get into surface contact on the support surfaces (42, 44) and the clamping faces (50, 52) form an angle of about one degree with each other which is open in the direction (G) of the belt withdrawal.

2. Safety belt restraining system according to claim 1, characterized in that a rib (402, 404) extending transversely to the direction (G) of the belt withdrawal is arranged on slide faces (54, 56) and/or the support surfaces (42, 44) which plastically deforms from a predetermined load and/or which is shearable so that the slide faces (54, 56) make a surface contact with the support surfaces (42, 44).

3. Safety belt restraining system according to claim 2, characterized in that in the faces (54, 56) and (42, 44), respectively, on which the rib (402, 404) is arranged, a groove (406, 408) is arranged next to the rib (402, 404), said rib (402, 404) penetrating into said groove under load.

4. Safety belt restraining system according to claim 1, characterized in that a rib (410) extending transversely to the direction (G) of the belt withdrawal is arranged on the slide faces (54, 56) and/or the support surfaces (42, 44), and a depression (412) is arranged and formed in the opposite support surface (42, 44) and slide face (54, 56), respectively, so that upon approaching of the clamping position the rib (410) penetrates into the depression (412) and the slide faces (54, 56) make surface contact with the support surfaces (42, 44).

5. Safety belt restraining system according to claim 1, characterized in that a spring (414) is provided in a cavity (416) in the support surface (42, 44) and/or slide face (54, 56), the spring (414) deforms from a predetermined load elastically so that the slide faces (54, 56) make a surface contact with the support surfaces (42, 44).

6. Safety belt restraining system according to any one of the preceding claims, characterized in that the slide faces (54, 56) are inclined to each other at an angle of about 27°.

7. Safety belt restraining system according to any one of the preceding claims, characterized in that the support surfaces (42, 44) and/or the slide faces (54, 56) are provided with a sliding coating.

8. Safety belt restraining system according to any one of the preceding claims, characterized in that the clamping faces (50, 52) of the clamping wedges (46, 48) are structured to promote friction and that the friction-promoting structure engages the webbing (22) in a manner non-detrimental to the webbing material.

9. Safety belt restraining system according to any one of the preceding claims, characterized in that the belt retractor (10) blockable in vehicle-sensitive and/or webbing-sensitive manner and the webbing clamping means (12) are connected together by connecting means (14, 16; 60, 62; 74, 76, 78, 80; 82, 84; 92, 104; 106, 112) which yield with plastic deformation and permit a limited moving of the webbing clamping means (12) away from the belt retractor (10) when the force exerted on the webbing (22) exceeds a predetermined value.

10. Safety belt restraining system according to claim 9, characterized in that the loadbearing housings (18, 64) of the belt retractor (10) and the webbing clamping means (12) are connected together by deformable webs (14, 16; 60, 62; 74, 76).

11. Safety belt restraining system according to claim 10, characterized in that the deformable webs (14, 16; 60, 62; 74, 76) are arcuate and are joined to the mutually adjacent housing ends.

12. Safety belt restraining system according to claim 11, characterized in that the deformable webs (60, 62) are joined together at their apex portions and in the region of their merging form a zone susceptible of breaking under load.

13. Safety belt restraining system according to claim 9, characterized in that the loadbearing housing of the belt retractor comprises at least one tab-like extension (92, 106) on which the loadbearing housing of the webbing clamping means (90) is mounted movably in the belt withdrawal direction (G) and which has at least one deformable web (98, 100, 102, 104; 108, 110) extending transversely of the belt withdrawal direction, and that the loadbearing housing of the webbing clamping means (90) comprises at least one nose (105, 112) with which it bears oppositely to the belt withdrawal direction (G) against the web (98, 108).

14. Safety belt restraining system according to claim 13, characterized in that a plurality of webs (98, 100, 102, 104; 108) are arranged in parallel and spaced from each other, having their apex portions facing said nose (105, 112).

## Revendications

1. Système de retenue de ceinture de sécurité pour véhicules, comprenant un enrouleur (10) de ceinture et un dispositif (12) de serrage de la sangle monté en aval de celui-ci et comprenant deux coins de serrage (46, 48) disposés en face l'un de l'autre de part et d'autre de la sangle (22), dont des surfaces de glissement (54, 56) tournées à l'opposé de la sangle (2) reposent contre des surfaces d'appui (42, 44) solidaires du boîtier et dont les surfaces de serrage opposées (50, 52) sont déplaçables ensemble, du fait de leur sensibilité au véhicule et/ou de leur sensibilité à la sangle, d'une position de repos à une position de serrage située dans le sens du prélèvement de la ceinture de manière qu'elles s'appliquent contre la sangle (22), les surfaces de serrage inscrivant entre elles, lorsqu'elles sont à la position de serrage, un angle qui est ouvert dans le sens du prélèvement de la ceinture, caractérisé en ce que, lorsque les surfaces de glissement (54, 56) sont en position de repos, elles sont maintenues par un organe de retenue (402, 404 ; 410 ; 414) à une position inclinée sur les surfaces d'appui (42, 44) et les surfaces de serrage (50, 52) sont tenues parallèles à la sangle et en ce que ces organes de retenue (402, 404 ; 410 ; 414) deviennent inactifs sous charge, de manière que les surfaces de glissement (54, 56) parviennent en contact de surface avec les surfaces d'appui (42, 44) et que les surfaces de serrage (50, 52) inscrivent entre elles un angle d'environ un degré qui est ouvert dans le sens (G) du prélèvement de la ceinture.

2. Système de retenue de ceinture de sécurité selon la revendication 1, caractérisé en ce qu'une nervure (402, 404) perpendiculaire à la direction (G) de prélèvement de la ceinture et disposée sur la surface de glissement (54, 56) et/ou sur la surface d'appui (42, 44) se déforme plastiquement à partir d'une charge prédéterminée et/ou se cisaille à partir d'une charge prédéterminée de manière que les surfaces de glissement (54, 56) se posent à plat contre les surfaces d'appui (42, 44).

3. Système de retenue de ceinture de sécurité selon la revendication 2, caractérisé en ce qu'une rainure (406, 408) dans laquelle la nervure (402, 404) s'engage sous charge est disposée à côté de cette nervure (402, 404) dans la surface (54, 56) ou (42, 44) sur laquelle la nervure (402, 404) est disposée.

4. Système de retenue de ceinture de sécurité selon la revendication 1, caractérisé en ce qu'une nervure (410) perpendiculaire à la direction (G) de déroulement de la ceinture est disposée sur la surface de glissement (54, 56) et/ou sur la surface d'appui (42, 44) et un creux (412) est disposé et conformé dans la surface d'appui (42, 44) ou la surface de glissement (54, 56) opposée de manière qu'au moment de l'approche de la position de serrage, la nervure (410) plonge dans le creux (412) et que les surfaces de glissement (54, 56) reposent à plat contre les surfaces d'appui (42, 44).

5. Système de retenue de ceinture de sécurité selon la revendication 1, caractérisé en ce qu'un ressort (414) est prévu dans un alvéole (416) de la surface d'appui (42, 44) et/ou de la surface de glissement (54, 56) et se déforme élastiquement à partir d'une charge déterminée de manière que les surfaces de glissement (54, 56) reposent à plat contre les surfaces d'appui (42, 44).

6. Système de retenue de ceinture de sécurité selon l'une des revendications précédentes, caractérisé en ce que les surfaces de glissement (54, 56) sont inclinées l'une par rapport à l'autre en formant un angle d'environ 27 degrés.

7. Système de retenue de ceinture de sécurité selon l'une des revendications précédentes, caractérisé en ce que les surfaces d'appui (42, 44) et/ou les surfaces de glissement (54, 56) comportent un revêtement anti-friction.

8. Système de retenue de ceinture de sécurité selon l'une des revendications précédentes, caractérisé en ce que les surfaces de serrage (50, 52) des coins de serrage (46, 48) sont structurées de manière à accroître le frottement et en ce que la structure destinée à accroître le frottement est adaptée à la matière de la sangle (22) de façon à ménager cette dernière.

9. Système de retenue de ceinture de sécurité selon l'une des revendications précédentes, caractérisé en ce que l'enrouleur (10) de ceinture qui est blocable du fait de sa sensibilité au véhicule et/ou de sa sensibilité à la sangle et le dispositif (12) de serrage de la ceinture sont reliés par des organes de liaison (14, 16 ; 60, 62 ; 74, 76, 78, 80 ; 82, 84 ; 92, 104 ; 106, 112) qui cèdent par déformation plastique et autorisent le dispositif (12) de serrage de la ceinture à s'éloigner sur une distance limitée de l'enrouleur (10) de ceinture lorsque la force exercée sur la sangle (22) dépasse une valeur prédéterminée.

10. Système de retenue de ceinture de sécurité selon la revendication 9, caractérisé en ce que le boîtier (18, 64) de l'enrouleur (10) de ceinture et celui du dispositif (12) de serrage de la ceinture qui supportent les charges sont reliés par des éléments déformables (14, 16 60, 62 ; 74, 76).

11. Système de retenue de ceinture de sécurité selon la revendication 10, caractérisé en ce que les éléments déformables (14, 16 ; 60, 62) sont arqués et sont reliés aux extrémités voisines des boîtiers.

12. Système de retenue de ceinture de sécurité selon la revendication 11, caractérisé en ce que les éléments déformables (60, 62) sont reliés par leurs sommets et forment un point de rupture dans la région de leur liaison.

13. Système de retenue de ceinture de sécurité selon la revendication 9, caractérisé en ce que le boîtier de l'enrouleur de ceinture qui supporte les charges comprend au moins un prolongement (92, 106) en forme de languette sur lequel le boîtier du dispositif (90) de serrage de la sangle qui supporte les charges est monté déplaçable dans le sens (G) de déroulement de la ceinture, ce prolongement comprenant au moins un élément déformable (98, 100, 102, 104 ; 108, 110) qui est perpendiculaire à la direction de déroulement de la sangle et en ce que le boîtier du dispositif (90) de serrage de la sangle qui supporte les charges comprend au moins un talon (105, 112) par lequel il s'appuie contre l'élément (98, 108) dans le sens opposé au sens (G) de déroulement de la ceinture.

14. Système de retenue de ceinture de sécurité selon la revendication 13, caractérisé en ce que plusieurs éléments arqués (98, 100, 102, 104 ; 108), dont les sommets sont tournés vers le talon (105, 112), sont disposés parallèlement les uns aux autres et à distance les uns des autres.
